Europäisches Patentamt

European Patent Office  (11) Numéro de publication: **0 040 147**

Office européen des brevets  **B1**

⑱

(12)  **FASCICULE DE BREVET EUROPEEN**

(45) Date de publication du fascicule du brevet: **24.07.85**  (51) Int. Cl.⁴: **C 05 F 7/00**

(21) Numéro de dépôt: **81400737.3**

(22) Date de dépôt: **08.05.81**

(54) Compost provenant de déchets organiques, procédé pour son obtention et installation pour la mise en oeuvre du procédé.

| | |
|---|---|
| (30) Priorité: **08.05.80 FR 8010327** | (73) Titulaire: **Weynandt, Jean Joseph**<br>**26, rue Dr. Guérin**<br>**F-37000 Tours (FR)** |
| (43) Date de publication de la demande:<br>**18.11.81 Bulletin 81/46** | (73) Titulaire: **Bringer, Jean-Louis**<br>**88, rue de Sèvres**<br>**F-75007 Paris (FR)** |
| (45) Mention de la délivrance du brevet:<br>**24.07.85 Bulletin 85/30** | (72) Inventeur: **Weynandt, Jean Joseph**<br>**26, rue Dr. Guérin**<br>**F-37000 Tours (FR)** |
| (84) Etats contractants désignés:<br>**AT BE CH DE FR GB IT LI LU NL SE** | (74) Mandataire: **Phélip, Bruno et al**<br>**c/o Cabinet Harlé & Phélip 21, rue de la**<br>**Rochefoucauld**<br>**F-75009 Paris (FR)** |
| (56) Documents cités:<br>**CH-A- 605 470**<br>**FR-A-2 150 245**<br>**FR-A-2 260 550** | |

Courier Press, Leamington Spa, England.

EP 0 040 147 B1

## Description

L'invention concerne le domaine du compostage des matières organiques. Elle a particulièrement pour objet un compost provenant de déchets organiques et possédant des propriétés améliorées. L'invention concerne aussi un procédé pour l'obtention de ce compost et une installation pour la mise en oeuvre dudit procédé.

On sait que le compostage consiste en une décomposition par voie biologique aérobie de matières organiques biodégradables, lesquelles se présentent le plus souvent à l'état physique solide. Cette opération permet d'obtenir un produit dénommé compost, qui est riche en matières humifiables, en sels minéraux et en micro-organismes utiles à la vie des végétaux. On peut traiter des déchets organiques très divers, tels que les boues des stations d'épuration, les ordures ménagères et autres déchets organiques. A titre de documents illustrant la technique de compostage, on peut se référer aux articles publiés dans "Le Moniteur", respectivement des 15 octobre 1979 et 3 mars 1980, ce dernier décrivant en particulier les principales caractéristiques et applications du compostage sous le titre général "Les grandes options techniques de l'assainissement contemporain—Le traitement des résidus urbains", sous la signature de Monsieur Michel MAES.

On connaît déjà de nombreux procédés et dispositifs pour composter les déchets organiques.

Ainsi, on a déjà proposé de traiter des gadoues, ou des boues, dans des tours de grandes dimensions, par exemple de 10 mètres de hauteur et de 6 mètres de diamètre. La tour comprend quatre secteurs séparés par des cloisonnements et, à la partie inférieure, un dispositif d'extraction à vis. Dans ce procédé connu, on introduit les déchets à traiter dans le premier secteur où ils séjournent par exemple pendant une journée. Les déchets sont ensuite évacués par la vis située au pied de la tour, et repris par un mécanisme élévateur pour être introduits à la partie supérieure de la tour, dans le deuxième secteur de celle-ci. Ces traitements sont répétés de secteur en secteur et durent ainsi quatre jours environ. Il s'agit donc d'un procédé accéléré de compostage qui, en outre, grâce à l'augmentation de température provoquée par la fermentation naturelle, serait cense détruire les germes pathogènes et conduire à une hygiénisation du produit finalement obtenu. Cependant, une telle technique présente des inconvénients et des difficultés pour sa mise en oeuvre. En effet, elle ne tient pas compte des nécessités biologiques du traitement des déchets, et la durée de traitement est très insuffisante pour fournir un composte convenable. Le produit obtenu convient pour un épandage sur le sol, mais il ne doit pas parvenir au contact des racines des végétaux car il n'a pas encore satisfait ses besoins en oxygène. Il ne s'agit donc pas d'un compost valablement mûri. En outre, l'installation est compliquée et sa mise en oeuvre se heurte à des difficultés sur le plan mécanique. On constate une usure rapide du matériel, notamment au niveau de la vis d'extraction. Il y a en outre beaucoup de manutentions qui sont dues aux extractions et élévations successives des déchets en cours de traitement. Il en résulte qu'une telle technique ne donne pas entière satisfaction dans la pratique, tant au niveau du produit qu'elle permet d'obtenir, que de ses conditions de mise en oeuvre.

On connaît un autre procédé de compostage qui est mis en oeuvre dans des appareils dits "digesteurs", consistant en des tours carrées de grande hauteur, par exemple de 12 mètres. La tour comporte des étages. La masse de déchets à traiter est introduite à la partie supérieure, et tombe d'un étage à l'autre pour aboutir à une ouverture amovible située à la partie inférieure. Les déchets cheminent dans la tour sous l'effet de la gravité, et le procédé peut être mis en oeuvre en continu, les déchets traités étant évacués à la partie inférieure, tandis que les déchets neufs sont introduits au fur et à mesure à la partie supérieure de la tour. La durée de séjour moyenne par étage est d'environ une journée, de sorte que pour les installations normalement mises en oeuvre dans la pratique, le traitement implique une durée totale d'environ 5 jours. La tour comporte, par ailleurs, des moyens d'adduction d'eau et d'insufflation d'air, pour porter la température à environ 65°C.

Une telle technique de fermentation aérobie activée ne fournit pas non plus un composte mûr. L'installation pour la mise en oeuvre de procédé est coûteuse à construire. Si l'on veut augmenter la durée de séjour des déchets dans la tour, et ainsi obtenir un compost convenablement mûri, l'installation ne devient plus rentable car la durée de séjour des déchets est trop élevée. On notera aussi que la structure étagée entraîne la chute des déchets, ce qui est préjudiciable à une bonne fermentation.

On a également proposé de traiter des déchets dans des tours ne comportant, à l'intérieur, aucun organe mécanique, à l'exception d'un égalisateur de la masse et d'un dispositif d'extraction spécifique, situé dans le bas de la tour. On se heurte également à des difficultés importantes lors de la mise en oeuvre, en raison des incidents mécaniques du dispositif d'extraction. Celui-ci est soumis à une abrasion considérable de la part des déchets. Etant donné qu'il n'est pas accessible, il faut périodiquement vider la tour, après avoir arrête l'exploitation, et vérifier l'usure des pièces mécaniques en mouvement, A ceci s'ajoute que la construction du dispositif utilisé pour l'extraction, entraîne des frais de fabrication importants. Il va sans dire également que pour obtenir un compost convenablement mûri, il faut faire appel à des durées de séjour assez importantes, ce qui immobilise la matériel outre mesure. Aucun moyen n'est prévu pour le mûrissement, condition pour fournir un compost de bonne qualité.

A la partie supérieure de la tour, les déchets à traiter sont introduits en continu. Le compost est extrait à la partie inférieure de la tour, après un temps de séjour d'environ 15 jours. On insuffle de l'air à la partie inférieure de la tour, et l'air chemine de bas en haut à travers la masse de déchets. La température, à l'intérieur de la tour, atteint 80°C à la partie supérieure. Au pied de la tour, les températures se réduisent pour atteindre environ 40°C lors de l'extraction. Pour éviter les déperditions de chaleur, la tour peut être calorifugée. L'insufflation d'air et l'échauffement de la masse amènent une réduction importante du volume des déchets en cours de traitement. Malgré l'évaporation de la masse, le volume de la tour reste élevé. Par exemple pour traiter par jour 50 T de gadoue, pour un temps de compostage d'une dizaine de jours, les dimensions de la tour sont de l'ordre de 10 m de hauteur pour 9 m de diamètre. De toute manière, cette durée n'est pas suffisante pour fournir un compost mûr. Le produit extrait doit être en effet placé sur une aire de mûrissement. Il faut attendre environ 8 semaines avant que le produit puisse être commercialisé. Mais en raison de sa technique de fabrication, le compost obtenu ne présente pas toutes les garanties quant à l'homogénéité et au mûrissement. En effet, la masse de déchets en cours de traitement dans la tour présente des compositions et densités variables selon le niveau où elle se trouve. En particulier, la densité est plus élevée en bas qu'en haut de la tour. L'air insufflé à la partie inférieure chemine mal à travers les couches basses, et il en résulte des trajets préférentiels dans la masse de déchets. Les conditions de fermentation sont donc différentes à travers la masse, ce qui conduit à un produit hétérogène. Une autre difficulté réside dans la préparation de la masse. En effet, il faut obtenir une masse qui possède un taux d'humidité déterminé et constant, par exemple de l'ordre de 60%, tout en restant suffisamment poreuse et homogène pour que l'air la traverse d'un manière uniforme.

On mentionnera également, pour mémoire, des techniques de compostage faisant appel à des constructions lourdes et coûteuses, avec des tambours de traitement. Ces tambours sont animés d'une vitesse de rotation très lente, et traitent quelques tonnes par heure de déchets. Ils sont traversés par un courant d'air qui permet d'apporter de l'oxygène aus bactéries. Pour rentabiliser l'installation, les temps de séjour des déchets sont de deux jours par exemple, et sont donc tout à fait insuffisants pour produire un compost mûr.

On signalera enfin qu'on a réalisé un compostage en procédant d'abord à une réduction de volume des déchets et en mettant ceux-ci sous forme de briquettes, qui sont ensuite entassées sur des chariots. Elles sont ainsi laissées au repos pendant plusieurs semaines, pour permettre un compostage lent. Après cette période, les briquettes sont broyées pour fournir le compost désiré. Une telle technique entraîne naturellement beaucoup de manipulations et de frais de fonctionnement.

L'invention a essentiellement pour objet d'améliorer les procédés connus impliquant une fermentation aérobie des déchets organiques. Le but essentiel de l'invention est de fournir un compost pouvant servir de substrat à la culture des végétaux, d'une manière en tout point semblable à celle d'un terreau naturel de sous-bois de forêt. Pour obtenir un tel produit à partir des déchets organiques, l'invention propose des conditions de traitement qui respectent la vie bactérienne et l'ordre d'intervention successif des microorganismes au sein de la masse. Celle-ci est maintenue dans des conditions statiques et homogènes, qui permettent de régler de manière contrôlée la température et l'aération en cours de traitement. L'invention a également pour objet une installation qui est aisée à mettre en oeuvre car elle ne fait appel qu'à des moyens simples, sans dispositif mécanique compliqué, et ne nécessitant que peu d'entretien. Grâce à la mise en oeuvre de ces moyens, l'invention procure une fermentation accélérée permettant d'obtenir dans le minimum de temps un compost répondant aux spécifications selon l'invention.

L'invention a pour objet un compost provenant de déchets organiques, qui peut être obtenu par le procédé décrit ci-après et qui présente les caractéristiques ci-après:

(a) caractéristiques physiques
— couleur brun foncé à noirâtre,
— structure et odeur semblable à celles d'un terreau de sous-bois de forêt,
— granulométrie telle qui 95% du produit passent à travers la maille de 8 mm.

(b) caractéristiques chimiques
— teneur en ammoniac libre; en substance néant
— sels azotés présents essentiellement sous forme de nitrates,
— sels soufrés présents essentiellement sous forme de sulfates,
— teneur en azote total (rapportée à la matière sèche); supérieure à 0,6%,
— pH compris entre 7 et 8 environ,
— rapport C/N compris entre 20 et 30, de préférence entre 20 et 25 environ.

A titre de moyen alternatif d'essai de la valeur du compost, on peut soumettre celui-ci à l'essai de croissance avec le cresson alénois. Un compost conforme aux caractéristiques a) et b) ci-dessus répond aux résultats suivants avec cet essai:

— levée des graines au moins égale à 90%,
— poids de cresson alénois égal à au moins deux fois le poids de la graine au bout de 6 jours.

Les caractéristiques (a) et (b) ce-dessus ne nécessitent pas de commentaires particuliers, et sont bien connues de l'homme de l'art.

L'essai de croissance avec des graines de cresson alénois, mentionné au paragraphe (c) ci-dessus, caractérise l'aptitude d'un substrat à la croissance des végétaux. Cet essai est par exemple décrit dans la publication Städte Hygiène (1968) N° 6 (M. SPOHN).

D'une façon résumée, l'essai consiste à prélever un échantillon du compost à expérimenter, à le disposer dans des récipients à raison d'une couche de 6 centimètres d'épaisseur et à disposer dessus des graines de cresson alénois. On observe la levée des plantules au 2ème jour et au 6ème jour. Celles-ci sont coupées et pesées au 6ème jour. Pour que le produit examiné soit convenable comme substrat, il faut que le poids des plantules récoltées au 6ème jour soit au moins égal à 2 fois le poids de la semence. Avec des récipients de $38 \times 28 \times 6$ centimètres, on utilise au début de l'essai un poids de graines de 10 g.

L'essai de croissance qui vient d'être décrit, permet d'une manière sûre et reproductible de vérifier qu'un compost déterminé répond aux besoins de l'invention, et a été convenablement mûri.

Par ailleurs, le compost selon l'invention est exempt de germes pathogènes. En outre, les graines de mauvaises herbes, qui s'y trouvent éventuellement contenues, ne germent plus. Moyennant des opérations préalables sur les déchets à traiter, on peut prendre les dispositions habituelles pour que les éléments solides que l'on trouve couramment dans les ordures ou dans les boues, en particulier les éclats de verre, soient éliminés en quasi-totalité dans le compost.

Ainsi, l'invention permet d'obtenir un produit dans lequel la teneur en éclats de verre dont la dimension est supérieure à 2 mm, reste inférieure à 0,5% en poids.

L'examen des caractéristiques du compost selon l'invention montre qu'il se différencie à de nombreux égards des composts non mûrs fournis par les procédés de la technique antérieure.

Dans sa présentation, le compost selon l'invention a la forme d'une poudre grumeleuse noirâtre sentant le terreau de sous-bois, alors que le compost non mûr a un aspect peu agréable, des restes de déchets étant visibles dans le produit industriel. Le compost de l'invention possède une odeur agréable et ne présente aucun symptome de putréfaction alors que le compost non mûr donne lieu à des dégagements de méthane et d'ammoniac qui sont les indices d'un putréfaction et entraînent une odeur nauséabonde. Les éléments azotés et soufrés se trouvent respectivement sous forme de nitrate et de sulfate dans le produit de l'invention, alors que dans les composts de la technique antérieure l'azote se trouve essentiellement sous forme de nitrite et que l'on trouve essentiellement le soufre sous forme de sulfite que constitue un poison pour les plantes.

Le compost selon l'invention ne possède que de très faibles besoins en oxygène, ceux-ci étant satisfaits à au moins 90%, ce que lui confère une bonne compatibilité avec les racines des plantes. Au contraire, les composts de l'état de la technique présentent encore des besoins élevés en oxygène, de sorte que, s'ils sont enfouis dans le sol, les racines des plantes meurent. On a constaté également que les oligoéléments sont bloqués dans le compost de l'invention, tout en restant disponibles pour les végétaux, alors que dans les produits analogues connus, les oligoéléments sont lessivables et, de ce fait, se perdent en majeure partie lors de l'utilisation. La teneur en enzymes et en antibiotiques est élevée dans le produit de l'invention et faible dans les composts connus. On a également trouvé dans le compost mûr de l'invention, une population élevée en bactéries, actinomycètes et champignons, non seulement en nombre, mais an espèces, ce qui conduit à un compost bien equilibré en vitalité. Au contraire, dans les produits de l'art antérieur, l'évantail est moins large en espèces de micro-organismes et également en nombre, ce qui procure une activité biologique moindre. En présence d'argile, le compost de l'invention forme des complexes argilo-humiques qui stabilisent l'humus avec toutes les conséquences favorables que cela entraîne pour la fertilité des sols. Dans de nombreux composts de l'état antérieur, il n'y a pas de formation de ces complexes argilo-humiques. Le nouveau produit possède un pouvoir très élevé de rétention d'eau, de sorte que l'eau mise ainsi en réserve est consommée au fur et à mesure des besoins. En revanche, les composts non mûrs connus ont un faible pouvoir de rétention d'eau. L'érosion des sols est complètement supprimée avec le compost mûr de l'invention, alors qu'elle n'est qu'atténuée avec les produits analogues connus.

Le produit de l'invention peut donc recevoir toutes les applications des composts, en offrant ainsi des débouchés très divers, tandis que dans de nombreux cas les produits connus ne peuvent être utilisés que pour la couverture des sols et n'ont donc que des débouchés limités. En outre, compte tenu des caractéristiques particulièrement avantageuses du compost de l'invention, les quantités à utiliser sont réduites par rapport aux composts connus, dans une proportion qui peut atteindre 1 à 5. Il s'ensuit donc une économie sensible de matière. On voit donc que le produit de l'invention est un compost de grande valeur par rapport aux composts non mûrs disponibles dans l'état de la technique.

Sous un autre aspect, l'invention a pour objet un procédé amélioré pour l'obtention d'un compost à partir de déchets organiques, dans lequel on soumet les déchets à une fermentation aérobie après an avoir éventuellement modifié la composition par des additions préalables de matières carbonées, azotées et/ou phosphorées, ledit procédé étant caractérisé en ce qu'il comprend les étapes suivantes:

a) Préparation des déchets à traiter impliquant:
   (I) un réglage du rapport C/N entre 20 et 30 environ,
   (II) un réglage du pH entre 6,8 et 7,5 environ, de préférence entre 7 et 7,5 environ,

(III) une homogénéisation de la masse de déchets conduisant à une masse homogène laissant passer aisément l'air,

(IV) un réglage de l'humidité entre 45 et 55% en poids environ, de préférence entre 50 et 55% environ;

b) Fermentation de ladite masse dans des conditions aéorobies statiques, dans une zone où la masse de déchets est au repos et où sa teneur en humidité est maintenue entre 45% et 55% en poids environ, avantageusement entre 50 et 55% en poids, avec circulation alternée d'air forcé de bas en haut à travers la masse et de haut en bas de celle-ci, de manière à maintenir dans la masse des conditions propres à assurer la croissance mésophile des bactéries, impliquant des températures de fermentation de 50 à 60°C, environ, de préférence entre 50 et 55°C;

c) Fermentation complémentaire, de durée raccourcie, en poursuivant la circulation alternée d'air, mais en maintenant dans la masse des conditions propres à assurer la croissance thermophile des bactéries et l'hygiénisation des déchets en cours de traitement, ce qui implique des températures supérieures à 70°C environ.

La durée des étapes b) et c) ci-dessus étant telle que la quasi-totalité des besoins en oxygène des microorganismes présents dans la masse soit satisfaite, et

d) Mûrissement de la masse de déchets, la masse étant laissée au repos dans des conditions statiques, sans circulation d'air, le mûrissement étant conduit jusqu'à obtention d'un compost ayant les caractéristiques désirées.

Le procédé de l'invention est applicable d'une manière très générale à des déchets de nature organique quelle qu'en soit l'origine. Il trouve une application particulièrement intéressante pour le compostage des boues de stations d'épuration. Comme matière de départ, on peut également mettre en oeuvre des lisiers et divers autres produits de vidange. Le procédé s'applique également au compostage des gadoues.

Une étape importante du procédé de l'invention réside dans la préparation de la masse de déchets à traiter. A cet effet on prévoit tout d'abord, si nécessaire, des moyens connus en eux-mêmes pour éliminer des déchets les matières non organiques, par exemple des éléments minéraux solides, tels que des éclats de verre, graviers ou autres, qui peuvent être écartés par des procédés connus. La mise en oeuvre de ces moyens physiques permet d'obtenir une masse de déchets homogène. De toute manière, les moyens particuliers à utiliser lors de la préparation des déchets varient selon la nature de ceux-ci. Une attention particulière doit être donnée à la préparation physico-chimique de la masse qui subira les opérations ultérieures de fermentation. Le premier paramètre à contrôler est le rapport C/N des composants de la masse, qui doit être fixé entre 20 et 30 et, de préférence, entre 20 et 25. Il faut donc prévoir, le cas échéant, des additions éventuelles compensatrices pour que le rapport C/N se situe dans les gammes indiquées. On peut utiliser à cet effet des additifs connus en eux-mêmes, par exemple des matières carbonées, et à ce titre, on fait appel notamment à la sciure de bois. Dans le cas du traitement des gadoues, on peut mélanger celles-ci à des boues, par exemple à 14% de matières sèches, plutôt que de recourir à des additions importantes de produits carbonés tels que la sciure de bois.

D'autres additifs convenables sont des terres argileuses, des phosphates et autres produits destinés à activer la vie bactérienne.

Selon un mode de mise en oeuvre avantageux de l'invention, on prévoit de traiter l'additif carboné, tel que la sciure de bois ou les écorces, par de la vapeur d'eau, avant de l'introduire dans la masse à composter. A cet effet, on peut faire passer un courant de vapeur d'eau, saturée ou non, à faible pression, à travers l'additif carboné, pendant environ 15 minutes. Ce traitement préalable permet d'améliorer la dégradation de la cellulose et de la lignine lors de la fermentation. On a constaté en effet que, dans de nombreux cas, la cellulose et la lignine ne sont pas décomposées totalement après fermentation. Grâce au traitement à la vapeur d'eau, le carbone est plus facilement attaqué. Si la matière carbonée contient des tannins, par exemple si la sciure et les écorces proviennent du chêne, du châtaignier et autres essences tanifères, la vapeur d'eau a aussi pour avantage de chasser les tanins. Après ce traitement à la vapeur d'eau on laisse refroidir par exemple à la température ambiante (25°C) l'additif carboné avant de le mélanger à la matière organique.

Selon une autre forme de réalisation, l'additif carboné, de préférence après traitement préalable à la vapeur d'eau, est ensemencé avec des enzymes capables d'attaquer les liaisons carbonées, et appartenant notamment au groupe des carbohydrases par exemple le cellulase et la lignase. Le produit carboné ainsi traité peut servir de "pied de cuve" pour préparer des quantités actives d'additif complémentaire, ce que réduit la consommation en enzymes.

Grâce aux moyens précités, à savoir un traitement préalable à la vapeur d'eau du produit carboné, combiné ou non à un traitement enzymatique, on améliore la fermentation et on diminue la durée du compostage. Dans une telle fermentation, le rapport en produits humifères peut aller jusqu'à 50%. Un tel rapport peut être mesuré par des techniques connues de l'homme de l'art, et décrites notamment dans l'ouvrage "Soil fertility" de F. W. PAULI, Adam HILGER Ltd., London (1967).

On verra ultérieurement que l'invention prévoit aussi un recyclage partiel du compost frais. Celui-ci, après fermentation et avant mûrissement, peut être recyclé vers l'étape de préparation pour être mélangé avec les déchets à traiter. Dans le cas du traitement des gadoues, le fait d'utiliser un mélange de gadoues, par exemple à environ 2/3 en poids, et de boues, à raison d'environ 1/3 (complément), permet de réduire une bonne partie du compost de recyclage et de supprimer la totalité d'un produit carboné additionnel.

Il convient également de régler le pH de la masse de déchets à des valeurs comprises entre 6,8 et 7,5 environ, en recourant à des additions de matières à caractère acide ou basique, selon la nature des déchets à traiter.

L'opération de préparation des déchets se réalise dans une zone de mélange où les divers produits sont mis en contact intime pour conduire à une masse homogène présentant une porosité suffisante. A cet égard on a constaté qu'on obtenait des résultats satisfaisants si, dans les conditions statiques de la fermentation, la résistance à l'air de la masse par mètre d'épaisseur de celle-ci ne dépassait pas 15 millibars.

Un autre paramètre important est la teneur en humidité de la masse qui doit être réglée entre 45 et 55% en poids environ d'eau, par exemple environ 50%. Là encore, selon la nature des déchets à traiter, des additions d'eau complémentaires peuvent s'avérer nécessaires.

Il va sans dire que l'invention permet de traiter des déchets organiques en mélange entre eux et que, dans chaque cas, des essais préalables à la portée de l'homme de l'art, sont nécessaires pour déterminer les paramètres de chacun de ces mélanges. Par exemple, on peut traiter des boues de décantation seules ou en mélange avec des lisiers et divers produits de vidange. Dans le cas du traitement des gadoues, on a vu qu'une bonne solution consistait à traiter un mélange de gadoues et de boues de décantation.

La masse ainsi préparée de déchets est ensuite soumise à une fermentation. Les conditions de ladite fermentation présentent une importance critique dans le cas du procédé de l'invention. Pendant la fermentation la masse reste en repos, de sorte que tout le traitement est réalisé dans des conditions statiques, ce que permet de ne pas perturber la croissance des hyphes et filaments des champignons, la prolifération des bactéries, actinomycètes et autres microorganismes utiles pour la fermentation. En outre, la fermentation est réalisée dans des conditions entièrement aérobies. A cet effet, on utilise pendant la fermentation, des conditions contrôlées de circulation d'air à travers la masse. Pendant toute la durée de la fermentation, on fait alterner la circulation de l'air en forçant celui-ci à circuler de bas en haut à travers la masse puis, par aspiration à la partie inférieure de la masse, à descendre à travers celle-ci, de haut en bas de la couche de déchets. Selon le cas, ces opérations alternées d'aspiration ou d'insufflation peuvent être séparées par des périodes où l'air ne circule pas, la masse étant alors laissée à elle-même, sans autre intervention extérieure. Si, comme dans la technique connue, le courant se fait dans un seul sens, soit par insufflation soit par aspiration, les couches traversées les premières reçoivent davantage d'oxygène que les suivantes, ce qui entraîne des différences dans la population microbienne. L'invention a supprimé cet inconvénient en faisant alterner l'insufflation et l'aspiration et en prévoyant, le cas échéant, d'intercaler des temps d'arrêt du courant d'air. Ainsi la fermentation se fait d'une façon uniforme dans toute la masse.

L'influence des moyens mis en oeuvre par l'invention, par comparaison avec ceux de l'art antérieur, se fait sentir aussi sur l'allure des courbes de température dans la masse de déchets. Lorsque, comme dans la technique connue, on réalise une aération unidirectionnelle, la température croît rapidement dans la masse de déchets pour atteindre au bout de 2 ou 3 jours, des valeurs de l'ordre de 65 à 75°C, qui sont situées par conséquent dans la zone thermophile, laquelle n'intéresse que peu d'espèces de microorganismes. La température décroît ensuite lentement pour atteindre les valeurs situées dans la zone mésophile, qui est la plus riche en espèces de microorganismes.

Au contraire avec le procédé de l'invention qui implique une aération à deux directions, on arrive à maintenir la courbe dans la zone mésophile pendant une période prolongée au début du traitement, ce qui est extrêmement favorable au développement des microorganismes les plus intéressants pour la fermentation.

L'invention prévoit donc de conduire la fermentation en deux étapes, l'une où des conditions de croissance mésophile des bactéries sont réalisées et l'autre, de durée raccourcie, au cours de laquelle croissent les bactéries thermophiles. Compte tenu du caractère exothermique de la fermentation, il est clair que la température dans les diverses couches de la masse de déchets à traiter, dépendra au débit de la circulation d'air. On prévoit une régulation entre la température mesurée en divers endroits de la masse et les moyens qui permettent d'agir sur l'aération. On peut ainsi rendre la fermentation entièrement automatique d'après le tracé de la courbe des températures. Des moyens de régulation analogues permettent d'agir sur la teneur en humidité de la masse, laquelle doit être maintenue entre 45 et 55% en poids, de préférence à 50% en poids, pendant toute la durée de la fermentation.

Les conditions particulières à mettre en oeuvre dépendent de la taille de l'installation et de la nature des éléments à traiter. Toutefois, l'homme de l'art dispose de nombreux moyens pour déterminer les paramètres les plus appropriés, notamment en procédant à des essais préalables. On dispose en effet d'un moyen commode pour apprécier le débit d'air à choisir. On a constaté en effet que si l'on utilise une quantité trop faible d'air, les gaz effluents ont une mauvaise odeur car le fermentation a fourni du méthane $CH_4$ au lieu de l'anhydride carbonique $CO_2$. Par contre, si l'on utilise une quantité trop importante d'air, la fermentation n'a pas le temps de se produire normalement. La teneur en $CO_2$, gaz sortant de la zone de fermentation, est donc un moyen commode de déterminer si le débit d'air est convenable. Dans la pratique, on a constaté que les gaz sortant de la zone de fermentation devaient contenir de 4 à 6% de $CO_2$. Pour des déchets de nature déterminée, on peut faire un essai préalable en utilisant un appareillage-pilote, par exemple un cylindre de 3 mètres de hauteur et de 60 cm de diamètre, dans lequel on introduit un échantillon de la masse de déchets à traiter. Le fond du cylindre est perforé pour permettre une insufflation d'air. Le débit d'air est mesuré par un compteur. On enregistre les courbes de température en prélevant les valeurs de température à divers endroits de la masse et on les compare avec les valeurs mesurées du débit d'air. On mesure aussi la teneur en $CO_2$ des gas sortant du cylindre, et on détermine ainsi les conditions à adopter dans l'installation industrielle.

Dans les conditions de fonctionnement industriel, des quantités d'air de l'ordre de 2 à 3 $m^3$, en particulier de 2,5 $m^3$, par mètre cube de masse de déchets et par heure, se sont avérées convenables pour l'aération de la masse, ceci dans les conditions de traitement prévues par l'invention, c'est-à-dire avec une circulation alternée d'air.

Au cours de la première étape de fermentation, qui implique la croissance mésophile des bactéries, la température de fermentation doit être d'au minimum 30°C et ne doit pas dépasser 65°C environ. Pour obtenir une prolifération optimale on choisit une gamme de température de 50 à 60°C, dans les conditions de mise en oeuvre de l'installation industrielle.

Dans la deuxième étape de la fermentation, la température est supérieure à 65°C, et de préférence supérieure à 70°C environ, dans les conditions de mise en oeuvre industrielle, afin de réaliser la croissance thermophile des bactéries et l'hygiénisation des déchets en cours de traitement.

Pendant toute la durée du traitement, la fermentation est réalisée dans des conditions aérobies. C'est pour cette question qu'on règle d'une manière particulièrement précise aussi bien l'alternance de circulation d'air que le volume d'air en circulation. Si la quantité d'air est excessive, la masse de déchets n'a pas le temps de consommer l'oxygène qui lui est fourni et l'on constate alors dans le gaz effluents une quantité d'oxygène résiduelle. Cet élément constitue un paramètre complémentaire de réglage pour le procédé. On a constaté que, dans les conditions de mise en oeuvre industrielle, la teneur en oxygène des gaz sortant de la zone de fermentation devait être de l'ordre de 10% en volume.

La durée de la fermentation dépend évidemment des déchets à traiter ainsi que des dimensions des installations. Cependant, des durées d'une quinzaine de jours se sont avérées convenables. Pendant cette période, la fermentation dans des conditions mésophiles représente au moins 10 jours, la deuxième étape de fermentation, dans des conditions thermophiles s'effectuant sur la période restant à courir jusqu'à 15 jours. La durée totale de la fermentation doit être telle que la quasi totalité des besoins en oxygène des micro-organismes présents dans la masse soit satisfaite. Dans la pratique, les besoins en oxygène sont satisfaits à raison de 90% au moins.

L'étape ultime du procédé de l'invention est un mûrissement de la masse après la fermentation de celle-ci. En vue du mûrissement, la masse peut rester dans la zone de fermentation, auquel cas elle est laissée au repos sans aucune circulation d'air, ou bien elle peut être évacuée de la zone de fermentation et entassée sur une aire en tas réguliers ayant une hauteur de 3 ou 4 mètres. La durée du mûrissement dépend de la qualité de la fermentation. Le mûrissement doit être poursuivi jusqu'à ce que le compost possède les caractéristiques désirées, c'est-à-dire atteigne un degré suffisant de maturité, ce qui est aisément constaté sur des prises d'échantillons par la mesure, notamment, de leurs caractères physico-chimiques tels que les teneurs en ammoniac, en nitrate, en sulfate, en azote total, le pH, le rapport C/N. On a dit aussi qu'un moyen extrêmement pratique d'essai de la valeur du compost consistait à faire croître des graines de cresson alénois sur une couche de produit. En règle générale, la durée du mûrissement est de l'ordre de 6 à 8 semaines.

L'invention peut encore tirer profit de la technique connue qui consiste à recycler une partie du compost vers l'étape de préparation, en vue de son mélange avec les déchets à traiter. A titre de produits de recyclage, on peut utiliser le produit provenant de la fermentation ou le compost après mûrissement final.

Selon un mode de réalisation avantageux, on met en oeuvre le procédé de l'invention dans une batterie de cellules et l'on utilise l'effluent gazeux en provenance d'une cellule en cours de fermentation pour sécher le compost déjà fermenté dans une autre cellule. On peut ainsi améliorer le séchage du compost et obtenir un compost à 35% d'humidité, par exemple, ce qui est favorable à la commercialisation. En effet l'effluent gazeux disponible dans une cellule en cours de fermentation se trouve à une température supérieure à la normale, pouvant atteindre 60 à 70°C ou davantage, en raison des réactions exothermiques de fermentation. Ce mode de réalisation est rendu possible, selon l'invention, lors de l'étape d'aspiration à travers la masse en fermentation, pour fournir un effluent gazeux réchauffé et disponible pour un séchage complémentaire du compost.

On constatera que le procédé de l'invention est mis en oeuvre d'une manière discontinue, la charge de déchets à traiter étant introduite complètement dans la zone de fermentation pour y être maintenue dans des conditions strictement statiques. Dans un mode de mise en oeuvre, la masse de déchets reste dans la zone de fermentation en vue de son mûrissement et n'est pas évacuée avant que celui-ci soit terminé. Dans un autre mode de mise en oeuvre, le mûrissement s'achève en dehors de la zone de fermentation.

Sous un autre aspect, l'invention a également pour objet une installation pour la mise en oeuvre du procédé ci-dessus mentionné, ladite installation comprenant essentiellement un mélangeur et au moins une cellule de fermentation, le mélangeur étant équipé de moyens connus pour son alimentation en déchets à traiter et pour le dosage des additifs destinés à la préparation de la masse de déchets, ainsi que de moyens pour acheminer et introduire la masse ainsi préparée dans la cellule, ladite installation étant caractérisée en ce que la masse de déchets préparée est introduite par le haut de la cellule, laquelle est à ciel ouvert, en ce que la cellule comporte au moins un panneau amovible pour le vidage de la masse après fermentation, en ce que le sol de la cellule présente des orifices régulièrement répartis pour laisser passage à l'air, et en ce que des moyens sont prévus pour établir une circulation forcée d'air à travers le sol d'une manière alternée par soufflage, l'air circulant alors dans le sense ascendant, et par aspiration, l'air circulant dans le sens descendant.

L'installation selon l'invention ne fait appel qu'à des moyens simples, ne nécessitant aucun dispositif mécanique compliqué et difficile à entretenir. Cependant, elle permet de réaliser une fermentation accélérée, grâce aux conditions prévues par le procédé de l'invention. Ainsi, en un mois environ, une telle installation est capable de fournir un compost répondant à la définition précédemment donnée, alors que dans des conditions naturelles, le compostage nécessiterait une durée de 4 à 6 mois.

De préférence, la cellule de fermentation a une section carrée ou rectangulaire. Parmi les parois latérales, trois sont des panneaux fixes tandis que le quatrième est mobile, par exemple par coulissement ou pivotement. La face supérieure est libre, la cellule étant à ciel ouvert, ce qui ne présente aucun inconvénient puisque la fermentation ne fournit que de la vapeur d'eau et du gaz carbonique.

Une seule unité de mélange et de préparation de la masse de déchets à traiter peut alimenter une batterie de cellules. Chaque cellule présente une hauteur limitée, par exemple de l'ordre de 4 mètres, et la masse de déchets qui s'y trouve contenue atteint une hauteur d'environ 3,50 m. Avec de telles dimensions, chaque cellule de fermentation se présente sous la forme d'une capacité rectangulaire d'environ 120 m³.

La circulation d'air est réalisée par le sol de la cellule de fermentation. Dans une forme préférée de réalisation, le sol de la cellule est constitué d'un pavage dont chaque pavé individuel comporte un perçage intérieur et un canal reliant ce perçage à la périphérie du pavé au voisinage de sa surface. La conformation du pavé est telle que l'orifice de sortie du canal ne peut pas être colmaté par les déchets qui se trouvent sur sa face supérieure. En outre, sur le plan mécanique, les pavés sont assemblés par conjugaison de formes et constituent dans leur ensemble une surface de roulement résistant à la pression et au passage d'engins lourds, par exemple les pelles mécaniques. Des pavés de ce type sont connus et mis sur le marché notamment par la Société Hötzel-Beton G.m.b.H.. L'invention tire profit de la structure de ces pavés en les utilisant pour le pavage de la cellule de fermentation et comme moyen d'acheminement de l'air. En effet, il est prévu selon l'invention, d'établir un réseau de canalisations, en particulier en matière plastique, traversant les pavés en se logeant à l'intérieur des perçages, chaque tuyau étant percé de trous au niveau d'un pavé, pour laisser passage à l'air sans contrepression, compte tenu de la masse des déchets à traiter. On a constaté que pour obtenir une fermentation dans des conditions aérobies, il était nécessaire de répartir avec régularité les sorties d'air afin d'assurer une répartition uniforme sur toute la surface du sol de chaque cellule. Dans la pratique, avec des cellules de section rectangulaire, on a trouvé que l'espacement des orifices d'air pouvait être d'environ 40 cm dans le sens longitudinal et environ 60 cm dans le sens transversal.

Pour les réalisations pratiques, on établit un réseau de canalisations en plastique traversant le pavage, qui peuvent être alimentées en air par une canalisation principale. Le pavage est réalisé sur une dalle en béton armé d'environ 10 cm d'épaisseur, ce qui lui permet de rester stable et de résister au passage des engins lourds.

Selon une autre caractéristique avantageuse de l'invention, les moyens pour la circulation de l'air comprennent des moyens de commutation, qui permettent d'utiliser pour l'insufflation et pour l'aspiration la même soufflante qui peut être de construction conventionnelle. Dans une telle forme de réalisation, des moyens de circulation d'air qui comprennent une soufflante conventionnelle avec une tubulure d'aspiration et une tubulure de refoulement, sont caractérisés par une tubulure de liaison entre la tubulure de refoulement et la tubulure d'aspiration, cette tubulure de liaison étant munie d'un clapet ou volet mobile pouvant l'obturer en totalité, et par une tubulure latérale piquée sur la tubulure de refoulement et comportant également un volet mobile, les deux volets précités pouvant être actionnés simultanément, afin de permettre dans une position, le fonctionnement à l'insufflation et dans une autre position, le fonctionnement à l'aspiration, la canalisation unique de sortie d'air étant prévue en prolongement de la tubulure de refoulement. La manoeuvre des clapets ou volets mobiles peut être réalisée par tout moyen de commande connu, par exemple par un motoréducteur.

Selon une forme avantageuse de réalisation, on peut chemiser la ou les cellules de fermentation et faire circuler dans la double enveloppe un fluide caloporteur, pour récupérer au moins partiellement la chaleur dégagée par la fermentation. On peut à cet effet réaliser les parois de la cellule considérée, sous forme d'une double cloison métallique et faire circuler de l'eau ou de l'air, à l'intérieur de l'espace creux ainsi créé, de préférence en calorifugeant la paroi tournée vers l'extérieur. Le fluide absorbe une partie de la chaleur dégagée par la fermentation et peut alors servir à chauffer des locaux, des serres et autres, ou à produire de l'eau chaude: Une telle réalisation est particulièrement conseillée lorsque l'installation de l'invention comporte au moins trois cellules, car l'une d'entre elles se trouve toujours à une niveau de chaleur élevé. Si la température de la masse en fermentation est de 60°C, le fluide caloporteur peut ainsi être aisément porté à une température d'environ 50°C.

La cellule de fermentation peut également comporter des moyens pour régler la teneur en humidité de la masse de déchets en cours de traitement, par exemple des rampes de pulvérisation d'eau.

Des instruments de mesure de la température, par exemple sondes à résistance, thermocouples et capteurs analogues, sont également prévus à divers niveaux de la cellule. Les informations fournies par ces instruments sont représentatives de l'état de la fermentation et peuvent permettre d'automatiser le fonctionnement de l'aération. Il suffit en effet d'asservir le moto-réducteur commandant les volets mobiles. Un émetteur de consignes, programmé, incorporé dans le circuit de régulation, peut permettre de rendre la fermentation entièrement automatique d'après le tracé prédéterminé de la courbe des températures.

Selon un mode de réalisation avantageux, l'installation comprend une batterie de cellules et comporte des moyens pour introduire dans une cellule, contenant du compost déjà fermenté, l'effluent gazeux aspiré à travers la masse d'une cellule en cours de fermentation.

Les seuls dispositifs mécaniques mobiles dans l'installation sont des vis sans fin qui sont prévues dans l'unité de mélange et aussi pour l'alimentation de chaque cellule. Lorsque la période de fermentation ou de mûrissement est terminée dans une cellule, on manoeuvre le panneau mobile de celle-ci pour permettre l'accès au produit à un engin tel qu'une pelle mécanique. On constate donc que l'installation de l'invention n'utilise qu'un minimum d'équipement mécanique pour l'alimentation, l'évacuation et la manutention du compost.

Dans une telle installation selon l'invention, la cellule de fermentation est d'une construction simple et économique, contrairement aux réalisations connues qui font appel à des tours de grande hauteur en béton ou en panneaux de bois, avec ossature métallique, réalisations qui coûtent cher et sont d'un fonctionnement délicat. Les tours nuisent aussi à l'environnement. Les manutentions sont réduites à leurs plus simple expression: des vis d'Archimède (en auge) sont prévues pour les transports des matières premières jusqu'au mélangeur et de là jusqu'aux cellules de fermentation, toutes ces opérations sont entièrement automatisées et fonctionnent sans l'intervention de personnel. Pour vider les cellules il suffit d'utiliser occasionnellement une pelle mécanique. L'installation ne comporte pas de mécanisme extracteur ni répartisseur de la masse, pas plus que des monte-charges ou élévateurs de la masse. De même, l'installation ne fait pas appel à des dispositifs de retournement de la masse qui vont à l'encontre des lois biologiques et nécessitent des engins lourds et coûteux.

Il en résulte que l'entretien d'un installation selon l'invention est beaucoup plus simple que celui des réalisations connues.

On notera aussi que le fonctionnement de l'installation entraîne une faible dépense d'énergie.

On voit donc que l'invention permet de transformer des déchets organiques de natures très diverses, en un compost de haute valeur commerciale, qui trouve des applications chez les paysagistes, horticulteurs, maraîchers, ainsi que dans la préparation des terreaux d'empotage, pour lesquels le compost mûr remplace avantageusement la tourbe.

L'invention sera maintenant illustrée, sans être aucunement limitée, par la description qui suit faite en référence aux dessins annexés sur lesquels:

Figure 1 est un schéma illustrant le procédé de l'invention.

Figure 2 est un graphique illustrant l'évolution de la température dans la cellule de fermentation, au cours du temps, dans une réalisation conforme à l'art antérieur.

Figure 3 est un graphique analogue à la figure 2, mais traduisant les résultats obtenus conformément à l'invention.

Figure 4 représente schématiquement une installation selon l'invention, comportant une batterie de 3 cellules vue en élévation.

Figure 5 est une vue en plan correspondant à la figure 4.

Figure 6 est une vue en plan du pavage de la cellule de fermentation, montrant schématiquement les moyens de circulation d'air.

Figure 7 est une vue en coupe transversale à travers un pavé conforme à la figure 6.

Figure 8 est une vue en coupe transversale d'une variante de réalisation de pavage pour cellule selon l'invention.

Figure 9 est une vue en perspective montrant de détail d'un élément de pavage conforme au mode de réalisation de la figure 8.

Figure 10 illustre les moyens de commutation de l'air destinés à établir d'une manière alternée l'insufflation et l'aspiration.

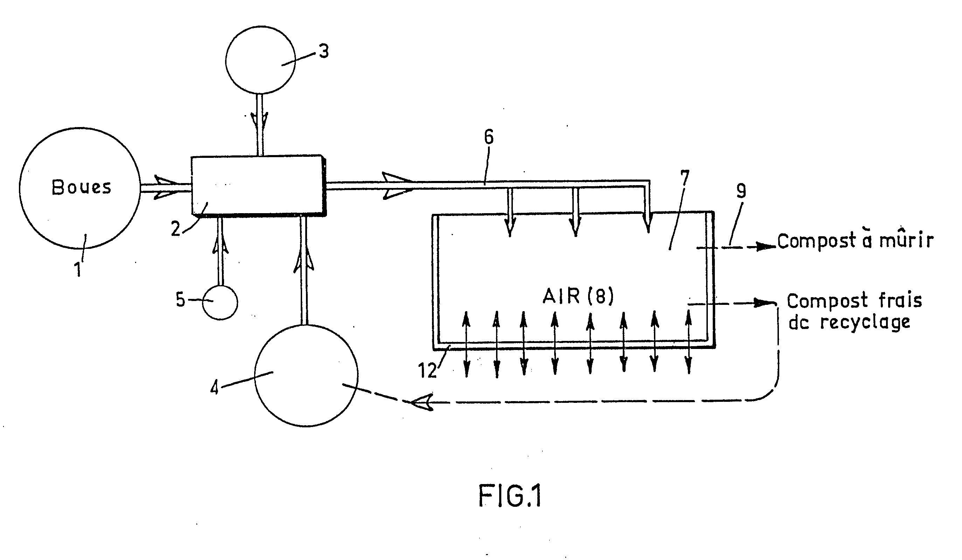

Tel qu'il est représenté à la Figure 1, le procédé de l'invention est appliqué au traitement des boues de décantation mais il peut être utilisé dans des conditions semblables pour le traitement de tous autres types de déchets organiques tels que gadoues, lisiers, vidanges, seuls ou en mélange entre eux. Il est préférable de déshydrater au préalable les boues, si nécessaire, de manière à disposer d'une matière première sous forme d'une boue déshydratée titrant 14 à 16% de matières sèches. Les boues (référence 1) sont introduites dans un mélangeur (2) où elles reçoivent divers autres produits pour régler notamment le rapport C/N à environ 22, alors que les boues de départ on un rapport C/N de 8 à 10. Une matière carbonée (3) est utilisée à cet effet, par exemple sous forme de sciure de bois, d'écores broyées ou, mieux encore, de gadoues broyées et criblées. Le mélangeur reçoit aussi du produit recyclé (4) constitué par du compost provenant de la cellule de fermentation. Le but de l'addition du produit (4) est de donner à la masse une structure poreuse perméable à l'air, favorable à la fermentation. On a également représenté en (5) une alimentation en divers autres additifs susceptibles d'améliorer la qualité du compost, en particulier pour fixer les métaux lourds, par exemple le cadmium, le zinc, le chrome.

Parmi les additifs (5) on peut également considérer l'eau, qui permet de régler la teneur en humidité du mélange final à environ 50%.

Le mélange ainsi préparé est acheminé par des vis d'Archimède (6) schématiquement représentées, dans une cellule de fermentation (7) à ciel ouvert. Dans la cellule (7) la circulation d'air se fait par le sol, comme représenté en (8). Le produit provenant de la cellule de fermentation constitue le compost (9) qui peut avoir subi un mûrissement dans la cellule (7) proprement dite ou être évacué pour subir un mûrissement ultérieur. On a représenté par la ligne pointillée, le compost de recyclage servant à alimenter en (4) le mélangeur (2).

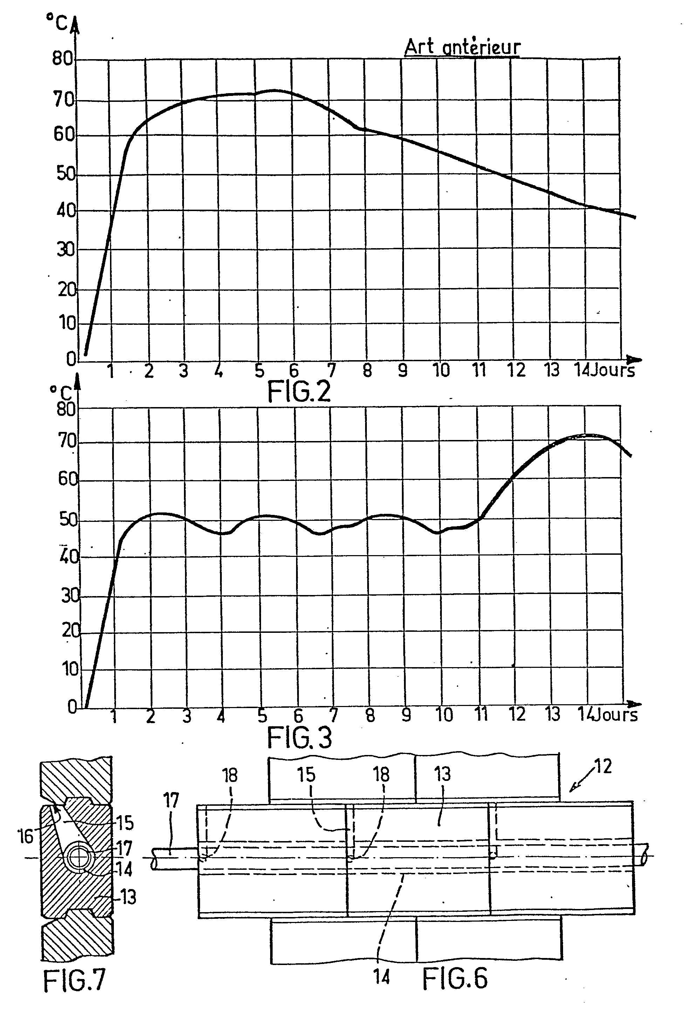

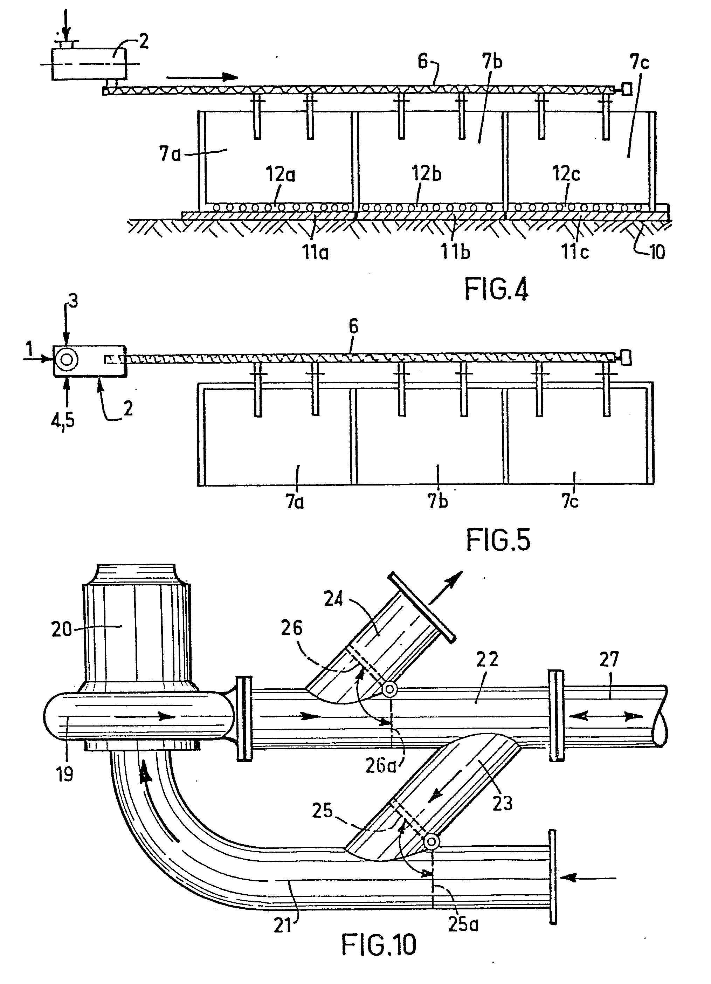

Le procédé de l'invention sera illustré par le graphique de la figure 3 en comparaison avec celui de la figure 2, qui est conforme à une réalisation de l'art antérieur. Chacun de ces graphiques montre la variation, en fonction du temps, de la température moyenne à l'intérieur de la cellule de fermentation. Lorsque le courant d'air se fait dans un seul sens, soit par insufflation, soit par aspiration, comme c'est le cas selon la figure 2, on constate d'abord une montée rapide de température qui, par exemple au bout de 2 jours, se trouve dans la zone thermophile. Celle-ci, ainsi qu'il est connu, est ralativement pauvre en espèces de microorganismes. La température évolue ensuite lentement pour parvenir dans la zone mésophile, par exemple au 11ème jour zone qui est la plus riche en espèces de microorganismes. On constate donc, qu'en plus du défaut inhérent à une aération unidirectionnelle, qui consiste en un manque d'uniformité de la répartition d'air au sein de la masse et, par consequent, d'un défaut d'uniformité de la fermentation, que les procédés de compostage de l'art antérieur privilégient la transformation mésophile au début du traitement, ce qui est globalement défavorable à une bonne fermentation.

Au contraire, comme l'illustre la figure 3, le procédé de l'invention parvient, grâce à une circulation d'air dans deux directions, à maintenir la courbe dans la zone mésophile pendant au moins une dizaine de jours, la dernière partie de la fermentation sur la période de 10 à 15 jours étant ensuite réalisée dans la zone thermophile afin d'hygiéniser totalement le compost. Ainsi qu'on l'a dit précédemment, on peut faire des études préalables sur la nature des déchets à traiter, et fixer la meilleure allure de courbe de température à prévoir pour la fermentation selon, notamment, la population en microorganismes présents dans ces déchets. On peut alors prendre comme valeur de consigne le tracé de la courbe de température et rendre entièrement automatique la fermentation conformément à ce tracé, en asservissant la circulation d'air. Au bout de 15 jours d'aération rationnelle, conformément à l'invention, la majeure partie des besoins en oxygène des microorganismes a été satisfaite, de sorte que l'aération peut être coupée sans que des zones anaérobies se manifestent dans la masse.

Les figures 4 et 5 représentent schématiquement une installation selon l'invention, dans laquelle un mélangeur (2) alimente une batterie de 3 cellules de fermentation (7a, 7b, 7c). La figure 4 est une vue en élévation alors que la figure 5 est une vue en plan. On a montré schématiquement à la figure 5, l'alimentation du mélangeur (2) à l'aide des boues (1), de la matière carbonée (3) et des additifs (4, 5) y compris le produit de recyclage. Une vis d'Archimède (6) recueille le produit à la sortie du mélangeur (2) et alimente chacune des cellules (7a, 7b, 7c), par des goulottes respectives.

Chaque cellule se présente sous la forme d'un récipient de section rectangulaire et d'environ 4 m de hauteur. La face supérieure est ouverte tandis que trois des faces latérales sont fixes, alors que la quatrième est mobile pour laisser accès à une pelle mécanique. Chaque cellule est construite sur le sol (10), par l'intermédiaire d'une dalle en béton respective (11a, 11b, 11c). Le fond de chaque cellule est fait d'un pavage (12) qui sera décrit plus en détail ci-après et qui sert à la circulation de l'air.

La figure 6 est une vue en plan d'une partie du pavage (12) et la figure 7 montre la disposition d'un pavé individuel au sein de ce pavage. Un pavé (13) comprend un perçage intérieur (14). Par ailleurs, le pavé (13) est muni d'un canal (15) qui part du perçage (14) et aboutit à un orifice (16) situé au voisinage de la face supérieure du pavé, mais en retrait de celle-ci. La figure 7 montre bien la constitution du pavage par conjugaison de formes entre un pavé (13) et deux pavés voisins. Ce type de pavé est déjà connu et disponible sur le marché sous la dénomination ELWU. Conformément à l'invention, on utilise ce pavage comme moyen pour assurer la circulation d'air par le fond de la cellule en disposant à l'intérieur des perçages (14) des canalisations (17) en matière plastique qui traversent, par l'intérieur, les rangées de pavés (13). Le canalisations (17) sont percées à intervalles réguliers de trous (18) qui se placent en vis-à-vis des canaux (15) des pavés. On parvient ainsi à organiser un réseau de canalisations (17) qui peuvent être directement alimentées à partir d'un collecteur et d'un dispositif assurant la circulation d'air.

Il est important que l'espacement des trous (18) soit déterminé pour assurer une répartition uniforme d'air sur toute la surface du sol de chaque cellule. Dans la pratique, avec des cellules ayant un volume de 120 m³ environ, on a trouvé que l'espacement de ces trous (18) pouvait être d'environ 40 cm dans le sens longitudinal et de 60 cm dans le sens transversal. Ces valeurs permettent d'empêcher la création de zones anaérobies dans la masse de déchets. On notera également que la résistance à la compression de ces pavés est de 5,6 kg/cm² et que leur pose permet d'assurer une tenue entièrement satisfaisante au passage d'engins lourds comme une pelle mécanique. Ainsi qu'on l'a dit précédemment, les pavages (13) reposent sur une dalle en béton armé (11a, 11b, 11c) qui peut avoir 10 cm d'épaisseur par exemple.

Bien que le pavage décrit en référence aux figures 6 et 7 procure d'excellents résultats, il va sans dire qu'il existe d'autres possibilités économiques de réaliser un pavage résistant au passage des engins, tout en comportant des canalisations d'air et une répartition judicieuse des orifices de sortie.

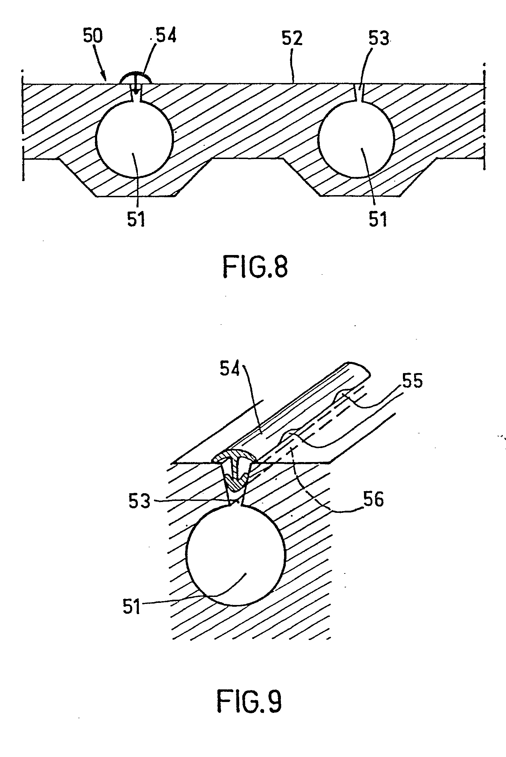

Une variante de réalisation est représentée aux figures 8 et 9, Sur la coupe transversale de la figure 8, le pavage désigné par la référence générale (50) comprend une série de canaux (51) parallèles s'étendant à l'intérieur de la dalle. L'écartement entre caniveaux peut être par exemple de 0,40 m. La surface de la dalle est désignée par (52). Chaque canal (51) présente une fente (53) qui débouche à la surface (52). Ce type de "caniveaux fendus" est utilisé habituellement pour le drainage des eaux de ruissellement en bordure des pistes d'aviation ou des autoroutes. Ces caniveaux circulaires, d'un diamètre de 20 cm par exemple, sont réservés au coulage au béton par l'utilisation de coffrages gonflables permettant d'en réaliser des longueurs jusqu'à 30 mètres. Sur le coffrage gonflé une règle est placée qui réalise une fente dans le béton entre la surface et le caniveau circulaire. Pour éviter le colmatage des fentes (53), on prévoit un profile (54) en matière plastique. La forme de la section du profilé le rend autobloquant.

La figure 9 illustre plus en détail la structure et le montage d'un profile (54). Conformément à l'invention, on prend des moyens pour assurer la ventilation par soufflage et aspiration dans le pavage. On voit le profile (54) dont la section a la forme d'une ancre. Des trous (55) sont percés dans le profilé (54) pour permettre le passage de l'air. Dans le fente (53) peut être logée (voir en pointillés 56) la tubulure d'amenée d'air.

On a représenté à la figure 8 un moyen préférentiel de l'invention qui permet d'assurer commodément la circulation d'air dans les deux sens avec la même soufflante de construction conventionnelle. La soufflante (19) est entraînée par un moteur (20). La tubulure (21) est la tubulure d'aspiration, tandis que la tubulure (22) est la tubulure de refoulement. Les tubulures (21) et (22) sont mises en liaison par une tubulure (23) comportant un volet mobile (25). En outre, une tubulure (24), également munie d'un volet mobile (26) est piquée sur la tubulure (22). Enfin, la canalisation (27) qui amène l'air à la cellule de fermentation, est prévue dans le prolongement de la tubulure (22). La disposition représentée à la figure 8 est telle que, lorsque les volets (25) et (26) sont manoeuvrés simultanément, la circulation d'air est inversée dans la canalisation (27). Lorsque les volets (25) et (26) se trouvent dans la position représentée à la figure 8 en hachures, l'air est aspiré par la tubulure (21) et est refoulé par la soufflante (19) dans la tubulure (22) et la canalisation (27) provoquant ainsi l'insufflation dans la cellule de fermentation. Si, par contre, les volets (25) et (26) sont basculés dans les positions représentées en pointillés en 25a et 26a, l'aspiration ne peut plus se faire que par la tubulure (23) et le refoulement se fait à travers la tubulure (24). Dans ce mode de fonctionnement, l'air est aspiré de haut en bas à travers la cellule.

On n'a pas représenté aux dessins les organes servant aux mesures des paramètres de la fermentation, par exemple les capteurs de température et dispositifs d'asservissement entre ces capteurs et le mécanisme de commande de la circulation d'air. On n'a pas représenté non plus les dispositifs servant à la préparation du mélange, non seulement pour le réglage du rapport C/N, mais aussi du taux d'humidité et du pH. Tous ces moyens sont à la partée de l'homme de l'art et n'ont pas besoin d'être décrits davantage.

L'invention sera encore illustrée à l'aide d'un exemple précis de réalisation.

Exemple

Cet exemple concerne le compostage de boues urbaines de décantation contenant au moins 14% de matières sèches. L'installation utilisée est du type décrit et illustré en référence aux figures 4 à 8. La préparation de la masse à fermenter est réalisée dans le malaxeur (2) à partir des composants suivants:

100 parties en volume de boues à 14% de matières sèches,

15 parties de sciure de bois,

200 parties de compost frais (recyclage)

5 parties d'additifs divers (terre argileuse, phosphate naturel et autres)

Le mélange est transporté par la vis sans fin (6), en continu, dans chacune des cellules de fermentation. Une cellule a une forme rectangulaire de longueur 12 m, de largeur 6 m et de hauteur 4 m. Les trois côtés d'une cellule sont constitués par des panneaux fixes et le quatrième par un panneau amovible. Après égalisation de sa partie supérieure la masse atteint, dans chaque cellule, une hauteur de 3,5 m. Elle est recouverte d'une couche de terre sablo-argileuse d'environ 1 cm et éventuellement d'un bâche perforée pour laisser libre passage aux gaz.

Dans un premier temps, l'air est insufflé par les tuyaux logés dans les pavés du sol jusqu'à ce que la température dans la masse indique 50°C. Ensuite, le courant d'air est inversé et aspiré à travers la masse. Sa pression est d'environ 52 millibars. Ces alternances sont commandées par les variations de la température d'un point type dans la masse d'une cellule, et la fermentation se poursuit ainsi pendant environ 10 jours à une température maintenue aux alentours de 55°C. Elle est ensuite poursuivie pendant 4 jours supplémentaires à une température voisine de 70°C. Au 15 ème jour l'aération est coupée. Des échantillons sont prélevées dans la masse pour être examinés quant à leur teneur en nitrite, en sulfite et en humidité. D'ailleurs, pendant la fermentation, l'humidité est mesurée à plusieurs reprises et maintenue à environ 50% par aspersion de la masse. De même sont enregistrés la pression de l'air, les températures, le débit d'air, paramètres qui permettent de vérifier des anomalies éventuelles au cours de la fermentation.

La cellule est vidée à l'aide d'une pelle mécanique qui transporte la masse sur l'aire de mûrissement. On constitue des andains en veillant à ce que les couches inclinées aient une épaisseur d'environ 50 cm, la hauteur moyenne du tas étant de 3 m. Au bout de 6 semaines, des échantillons sont prélevés en plusieurs endroits à une profondeur d'environ 1 m, pour être examinés à l'aide de l'essai de croissance avec des graines de cresson alénois. Selon cet essai, on observe la levée des plantules au 2ème jour. Le 6ème jour les plantules sont coupées et pesées; leur poids doit être égal à au moins 2 fois le poids de la semence pour que le compost soit considéré comme mûr et bon à être expédié.

## Revendications

1. Procédé amélioré pour l'obtention d'un compost à partir de déchets organiques, dans lequel on soumet les déchets à une fermentation aérobie après en avoir éventuellement modifié la composition par des additions préalables de matières carbonées, azotées et/ou phosphorées, ledit procédé étant caractérisé en ce qu'il comprend les étapes suivantes:

a) Préparation des déchets à traiter impliquant:

(I) un réglage du rapport C/N entre 20 et 30

(II) un réglage du pH entre 6,8 et 7,5, de préférence entre 7 et 7,5

(III) une homogénéisation de la masse de déchets conduisant à une masse homogène laissant passer aisément l'air;

(IV) un réglage de l'humidité entre 45 et 55% en poids, de préférence entre 50 et 55%

b) Fermentation de ladite masse dans des conditions aérobies statiques, dans une zone où la masse de déchets est au repos et où sa teneur en humidité est maintenue entre 45 et 55% en poids, avantageusement entre 50 et 55% en poids, avec circulation alternée d'air forcé de bas en haut à travers la masse et de haut en bas de celle-ci de manière à maintenir dans la masse des conditions propres à assurer la croissance mésophile des bactéries, impliquant des températures de fermentation de 50 à 60°C, de préférence entre 50 et 55°C;

c) Fermentation complémentaire, de durée raccourcie, en poursuivant la circulation alternée d'air, mais en maintenant dans la masse des conditions propres à assurer la croissance thermophile des bactéries et l'hygiénisation des déchets en cours de traitement, ce qui implique des températures supérieures à 70°C,

la durée des étapes b) et c) ci-dessus étant telle que la quais totalité des besoins en oxygène des microorganismes présents dans la masse soit satisfaite, et

d) Mûrissement de la masse de déchets, la masse étant laissée au repos dans des conditions statiques, sans circulation d'air.

2. Procédé selon la revendication 1, caractérisé en ce qu'on traite des boues de décantation, des gadoues, des lisiers, des produits de vidange et autres déchets organiques, seuls ou en mélange entre eux, par exemple un mélange de gadoues et de boues dans les proportions respectives de 2/3 et 1/3 en poids.

3. Procédé selon l'une des revendications 1 ou 2, caractérisé en ce qu'on fixe le rapport C/N entre 20 et 30, et de préférence entre 20 et 25, grâce à des additions de matières carbonées; par exemple de la sciure de bois, des écorces broyées ou des gadoues broyées et criblées.

4. Procédé selon la revendication 3, caractérisé en ce qu'on soumet au préalable la matière carbonée à un traitement à la vapeur d'eau, saturée ou non, après quoi on laisse refroidir la matière carbonée avant de la mélanger aux déchets organiques.

5. Procédé selon l'une des revendications 3 ou 4, caractérisé en ce qu'on ajoute à la matière carbonée, de préférence après traitement à la vapeur d'eau, des enzymes capables d'attaquer les liaisons carbonées, telles que les enzymes du groupe des carbohydrases, notamment la cellulase et la lignase.

6. Procédé selon l'une quelconque des revendications 1 à 5, caractérisé en ce que dans l'étape (a) de préparation des déchets, on mélange des additifs destinés à améliorer la qualité du compost, tels que des terres argileuses, des phosphates naturels et autres additifs analogues.

7. Procédé selon l'une quelconque des revendications 1 à 6, caractérisé en ce qu'on prévoit un recyclage partiel du compost, celui-ci, après fermentation et avant mûrissement, étant recyclé à l'étape de préparation pour être mélangé avec les déchets à traiter.

8. Procédé selon l'une quelconque des revendications 1 à 7, caractérisé en ce que, au cours des étapes (b) et (c) de fermentation, les opérations alternées d'insufflation et d'aspiration sont séparées par des périodes pendant lesquelles l'air ne circule pas.

9. Procédé selon l'une quelconque des revendications 1 à 8, caractérisé en ce que la durée totale de la fermentation est telle que les besoins en oxygène des microorganismes présente dans la masse de déchets à traiter sont satisfaits à raison de 90% au moins.

10. Procédé selon la revendication 9, caractérisé en ce que la durée de l'étape de fermentation (b) est d'une dizaine de jours à une température de 50 à 55°C, tandis que la durée de l'étape de fermentation (c) est de 4 à 5 jours à une température de 65—70°C.

11. Procédé selon l'une quelconque des revendications 1 à 10, caractérisé en ce que pendant la fermentation, la teneur en $CO_2$ des gaz sortant de la zone de fermentation est de 4 à 6% en volume, et que leur teneur en oxygène est de l'ordre de 10% en volume.

12. Procédé selon l'une quelconque des revendications 1 à 11, caractérisé en ce que, au cours de l'étape (d) de mûrissement, la masse est laissée au repos dans la zone de fermentation sans aucune circulation d'air, ou bien est évacuée de ladite zone et étendue sur une aire de mûrissement en tas réguliers.

13. Procédé selon la revendication 12, caractérisé en ce que la durée du mûrissement est de 6 à 8 semaines.

14. Procédé selon l'une quelconque des revendications 1 à 13, caractérisé en ce qu'il est mis en oeuvre dans une batterie de cellules et qu'on utilise l'effluent gazeux en provenance d'une cellule en cours de fermentation pour sécher le compost déjà fermenté dans une autre cellule, ledit effluent étant alors aspiré à travers la masse en cours de fermentation et envoyé dans la cellule contenant le compost déjà fermenté.

15. Compost provenant de déchets organiques, qui peut être obtenu par le procédé selon l'une quelconque des revendications 1 à 14 et présente les caractéristiques ci-après:

(a) Caractéristiques physiques
— couleur brun foncé à noirâtre
— structure et odeur semblables à celles d'un terreau de sous-bois de forêt,
— granulométrie tell que 95% du produit passent à travers la maille de 8 mm.

(b) Caractéristiques chimiques
— teneur en ammoniac libre: en substance néant,
— sels azotés présents essentiellement sous forme de nitrates,
— sels soufrés essentiellement sous forme de sulfates,
— teneur en azote total (rapportés à la matière sèche): supérieure à 0,6%
— pH compris entre 7 et 8
— rapport C/N compris entre 20 et 30, de préférence entre 20 et 25.

16. Compost selon la revendication 15, caractérisé en ce qu'il est exempt de germes pathogènes tandis que les graines de mauvaises herbes, qui s'y trouvent éventuellement contenues, ne germent plus.

17. Installation pour la mise en oeuvre du procédé selon l'une quelconque des revendications 1 à 13, ladit installation comprenant essentiellement un mélangeur (2) et au moins une cellule de fermentation (7), le mélangeur (2) étant équipé de moyens connus pour son alimentation en déchets à traiter (1) et pour le dosage des additifs (3, 4, 5) destinés à la préparation de la masse de déchets, ainsi que des moyens (6) pour acheminer et introduire la masse ainsi préparée dans le cellule (7), ladite installation étant caractérisée en ce que la masse de déchets préparée est introduite par le haut de la cellule (7), laquelle est à ciel ouvert, en ce que la cellule (7) comporte au moins un panneau amovible pour la vidange de la masse après fermentation, en ce que le sol (12) de la cellule présente des orifices (18) régulièrement répartis pour laisser passage à l'air et en ce que des moyens (8) sont prévus pour établir une circulation forcée d'air à travers le sol (12) d'une manière alternée par soufflage, l'air circulant alors dans le sens ascendant, et par aspiration, l'air circulant alors dans le sens descendant.

18. Installation selon la revendication 17, caractérisée en ce que la cellule de fermentation (7) présente une section carrée ou rectangulaire, l'une des parois latérales étant mobile.

19. Installation selon l'une des revendications 17 ou 18, caractérisée en ce que la cellule (7) présente une hauteur limitée, par exemple de l'ordre de 4 m, et une contenance en volume d'environ 120 m³.

20. Installation selon l'une quelconque des revendications 17 à 19, dans laquelle le sol (12) de la cellule (7) de fermentation est constitué d'un pavage dont chaque pavé individuel (13) comporte un perçage intérieur (14) et un canal (15) reliant ce perçage à la périphérie (16) du pavé, ladite installation étant caractérisée en ce qu'elle comprend un réseau de canalisations (17) traversant le pavage en passant dans les perçages intérieurs (14), chaque canalisation étant percée de trous (18) pour la circulation de l'air.

21. Installation selon la revendication 20, caractérisée en ce que, avec une cellule (7) de section rectangulaire, l'espacement des orifices d'air (18) est de 40 cm dans le sens longitudinal et de 60 cm dans le sens transversal.

22. Installation selon l'une quelconque des revendications 17 à 21, dans laquelle les moyens (8) de circulation d'air comprennent une soufflante (19) conventionnelle avec une tubulure d'aspiration (21) et une tubulure de refoulement (22), ladite installation étant caractérisée par des moyens de commutation consistant en une tubulure de liaison (23) entre la tubulure de refoulement (22) et la tubulure d'aspiration (21), cette tubulure de liaison (23) étant munie d'un clapet ou volet mobile (25) pouvant l'obturer en totalité, ainsi qu'en une tubulure latérale (24) piquée sur la tubulure de refoulement (22) et comportant également un volet mobile (26), les deux volets (25) et (26) pouvant être actionnés simultanément afin de permettre dans une position l'insufflation, et dans l'autre position l'aspiration canalisation (27) unique de sortie d'air étant prévue en prolongement de la tubulure de refoulement (22).

23. Installation selon l'une quelconque des revendications 17 à 22, caractérisée en ce qu'elle comporte un asservissement entre les données concernant la température au sein de la masse en cours de fermentation, et la commande de la circulation d'air.

24. Installation selon l'une quelconque des revendications 17 à 23, caractérisée en ce qu'au moins une cellule de fermentation comporte des doubles parois pour permettre la circulation d'un fluide caloporteur et récupérer au moins partiellement la chaleur dégagée par la fermentation.

25. Installation selon l'une quelconque des revendications 17 à 24, caractérisée en ce qu'elle comporte des moyens pour introduire dans une cellule contenant du compost déjà fermenté, l'effluent gazeux aspiré à travers la masse d'une cellule en cours de fermentation.

**Patentansprüche**

1. Verbessertes Verfahren zur Herstellung von Kompost aus organischen Abfällen, bei dem man die Abfälle einer aeroben Fermentierung unterwirft, nachdem man die Zusammensetzung gegebenenfalls durch vorherige Zugaben von kohlenstoffhaltigen, stickstoffhaltigen und/oder phosphohaltigen Stoffen modifiziert hat, dadurch gekennzeichnet, dass man die folgenden Stufen durchführt:

(a) Vorbereitung der zu behandelnden Abfälle unter Einfluss von:

(I) einer Regelung der Verhältnisses C/N zwischen 20 und 30

(II) einer Regelung des pH zwischen 6, und 7,5, vorzugsweise zwischen 7 und 7,5

(III) einer Homogenisierung der Abfallmasse, die zu einer homogenen Masse führt, welche die Luft leicht durchlässt;

(IV) einer Regelung der Feuchtigkeit zwischen 45 und 55 Gewichtprozent, vorzugsweise zwischen 50 und 55 Prozent

(b) Fermentierung dieser Masse unter statischen aeroben Bedingungen in einer Zone, in der die Abfallmasse in Ruhe ist und in der ihr Feuchtigkeitsgehalt zwischen 45 und 55 Gewichtsprozent, vorzugsweise zwischen 50 und 55 Gewichtsprozent gehalten wird, verbunden mit einem regelmässig wechselnden Zwangsumlauf von Luft von unten nach oben durch die Masse und von oben nach unten derart, dass in der Masse geeignete Bedingungen aufrechterhalten werden, um das mesophile Wachstum der Bakterien sicherzustellen, was Fermentationstemperaturen von 50 bis 60°C, vorzugsweise zwischen 50 und 55°C einschliesst;

(c) zusätzliche Fermentierung von verkürzter Dauer, indem man den regelmässig wechselnden Umlauf von Luft fortsetzt, indem aber in der Masse geeignete Bedingungen zum Sicherstellen des thermophilen Wachstums der Bakterien und zum hygienisch Einwandfreiwerden der Abfälle im Verlauf der Behandlung aufrechterhält, was Temperaturen über 70°C einschliesst, wobei die Dauer der oben genannten Stufen (b) und (c) so ist, dass quasi der Gesamtbedarf der Mikroorganismen an Sauerstoff, die in der Masse anwesend sind, gedeckt ist, und

(d) Reifung der Abfallmasse, wobei die Masse unter statischen Bedingungen ohne Luftumwälzung in Ruhe gelassen wird.

2. Verfahren nach Anspruch 1, dadurch gekennzeichnet, dass man Klärschlamm, Mist, Jauche, Entleerungsprodukte und andere organische Abfälle, allein oder miteinander gemischt, z. B. eine Mischung von Mist und von Kot in Gewischtsanteilen von 2 Drittel bzw. 1 Drittel behandelt.

3. Verfahren nach Anspruch 1 oder 2, dadurch gekennzeichnet, dass man das Verhältnis C/N zwischen 20 und 30, und vorzugsweise zwischen 20 und 25, durch Zugabe von kohlenstoffhaltigen Stoffen, z. B. von Sägemehl, zerkleinerten Baumrinden oder zerkleinertem und gesiebtem Mist festlegt.

4. Verfahren nach Anspruch 3, dadurch gekennzeichnet, dass man vorher den kohlenstoffhaltigen Stoff einer Behandlung mit gesättigtem oder nicht-gesättigtem Wasserdampf unterwirft, wonach man den kohlenstoffhaltigen Stoff abkühlen lässt, bevor man ihn mit den organischen Abfällen vermischt.

5. Verfahren nach einem der Ansprüche 3 oder 4, dadurch gekennzeichnet, dass man den kohlenstoffhaltigen Stoff vorzugsweise nach Behandlung mit Wasserdampf Enzyme zusetzt, die die Kohlenstoffbindungen angreifen können, wie z. B. die Enzyme aus der Gruppe der Carbohydrasen, insebesondere die Cellulase und Lignase.

6. Verfahren nach einem der Ansprüche 1 bis 5, dadurch gekennzeichnet, dass man in der Stufe (a) der Vorbereitung der Abfälle Zusätze zur Verbesserung der Qualität des Komposts zumischt, wie z. B. Tonerden, natürliche Phosphate und andere entsprechende Zusätze.

7. Verfahren nach einem der Ansprüche 1 bis 6, dadurch gekennzeichnet, dass man eine teilweise Rückführung des Komposts im Kreislauf vorsieht, wobei der Kompost nach der Fermentierung und vor der Reifung zur Stufe der Vorbereitung zurückgeführt wird, damit er mit den zu behandelnden Abfällen gemischt wird.

8. Verfahren nach einem der Ansprüche 1 bis 7, dadurch gekennzeichnet, dass im Verlauf der Fermentierungsstufen (b) und (c) die abwechselnden Verfahrensschritte des Einblasens und des Ansaugens von Zeitabschnitten getrennt sind, in denen die Luft nicht zirkuliert.

9. Verfahren nach einem der Ansprüche 1 bis 8, dadurch gekennzeichnet, dass die Gesamtdauer der Fermentierung so ist, dass der Sauerstoffbedarf der Mikroorganismen, die in der zu behandelnden Abfallmasse vorliegen, wenigstens zu 90% befriedigt wird.

10. Verfahren nach Anspruch 9, dadurch gekennzeichnet, dass die Dauer der Fermentierungsstufe (b) etwa 10 Tage bei einer Temperatur von 50 bis 55°C beträgt, während die Dauer der Fermentierungsstufe (c) 4 bis 5 Tage bei einer Temperatur von 65 bis 70°C beträgt.

11. Verfahren nach einem der Ansprüche 1 bis 10, dadurch gekennzeichnet, dass während der Fermentierung der Gehalt des aus der Fermentierungszone entweichenden Gases an $CO_2$ 4 bis 6 Volumenprozent und ihr Gehalt an Sauerstoff in der Grössenordnung von 10 Volumenprozent betragen.

12. Verfahren nach einem der Ansprüche 1 bis 11, dadurch gekennzeichnet, dass während der Reifungsstufe (d) die Masse in der Fermentierungszone ohne jede Luftzirkulation in Ruhe gelassen wird oder aus dieser Zone entleert wird und auf einer Reifungsfläche in regelmässigen Haufen ausgebreitet wird.

13. Verfahren nach Anspruch 12, dadurch gekennzeichnet, dass die Dauer der Reifung 6 bis 8 Wochen beträgt.

14. Verfahren nach einem der Ansprüche 1 bis 13, dadurch gekennzeichnet, dass es in einer Gruppe von Zellen durchgeführt wird und dass man den gasförmigen Abgang, der im Verlauf der Fermentierung aus einer Zelle stammt, zum Trocknen des bereits fermentierten Kompost' in einer anderen Zelle verwendet, dass der Abgang dann quer durch die Masse im Verlauf der Fermentation gesaugt wird und in dei Zelle, die den bereits fermentierten Kompost enthält, engeleitet wird.

15. Kompost aus organischen Abfällen, der erhalten werden kann nach dem Verfahren nach einem der Ansprüche 1 bis 14 und die folgenden Eigenschaften aufweist:

(a) Physikalische Eigenschaften:
— Dunkelbraune bis schwärzliche Farbe
— Struktur und Geruch ähnlich denen von Walderde,
— Korngröße und —verteilung so, dass 95% des Produkts durch ein Sieb mit 8 mm Maschenweite hindurch geht,

(b) Chemische Eigenschaften:
— Gehalt an freiem Ammoniak: im wesentlichen keiner,
— Stickstoffsalze liegen im wesentlichen in Form von Nitraten vor,
— Schwefelhaltige Salze liegen im wesentlichen in Form von Sulfaten vor,
— Gehalt an Gesamtstickstoff (bezogen auf Trockenmasse): uber 0,6%
— pH zwischen 7 und 8
— Verhaltnis C/N zwischen 20 und 30, vorzugsweise zwischen 20 und 25.

16. Kompost nach Anspruch 15, dadurch gekennzeichnet, dass er frei von pathogenen Keimen ist, während die Umkrautsamen, die gegenbenenfalls darin enthalten sind, nicht mehr keimen.

17. Einrichtung zur Durchführung des Verfahrens nach einem der Ansprüche 1 bis 13, wobei die Einrichtung im wesentlichen einen Mischer (2) und wenigstens eine Fermentierungszelle (7) enthält, wobei der Mischer (2) mit bekannten Mitteln zu seiner Beschickung mit zu behandelnden Abfällen (1) und für die Dosierung der Zusätze (3, 4, 5) die zur Vorbereitung der Abfallmasse bestimmt sind, versehen ist, sowie Mittel (6) zum Weiterleiten und Einleiten der so vorbereiteten Masse in die Zelle (7) wobei die Einrichtung dadurch gekennzeichnet ist, dass die vorbereitete Abfallmasse von oben in die Zelle (7) eingebracht wird, die nach oben offen ist, dass die Zelle (7) wenigstens eine entfernbare Platte für die Entleerung der Masse nach der Fermentierung enthält, dass der Boden (12) der Zelle regelmässig verteilte Öffnungen (18) aufweist, um ein Hindurchstreichen der Luft zuzulassen, und dass Mittel (8) vorgesehen sind, um einem Zwangsumlauf der Luft quer über den Boden (12) in abwechselnder Art durch Blasen, wobei die Luft dann in aufsteigender Richtung zirkuliert und durch Ansaugen, wobei die Luft dann in absteigender Richtung zirkuliert, zu schaffen.

18. Einrichtung nach Anspruch 17, dadurch gekennzeichnet, dass die Fermentierungszelle (7) einen quadratischen oder rechteckigen Querschnitt besitzt, wobei eine der Seitenwände beweglich ist.

19. Einrichtung nach einem der Ansprüche 17 oder 18, dadurch gekennzeichnet, dass die Zelle (7) eine begrenzte Höhe, z. B. im Bereich von 4 m und einen Volumeninhalt von etwa 120 $m^3$ besitzt.

20. Einrichtung nach einem der Ansprüche 17 bis 19, bei der der Boden (12) der Fermentierungszelle (7) aus einem Pflaster gebildet wird, wobei jeder individuelle Pflasterstein (13) eine Innenbohrung (14) und einen Kanal (15) besitzt, den die Bohrung mit dem Umfang (16) des Pflastersteins verbindet, wobei die Einrichtung dadurch gekennzeichnet ist dass sie ein Leitungsnetz (17) enthält, das quer über das Pflaster reicht, indem es in den Innenbohrungen (14) verläuft, wobei jede Leitung mit Löchern (18) für die Luftzirkulation durchbrochen ist.

21. Einrichtung nach Anspruch 20, dadurch gekennzeichnet, dass bei einer Zelle (7) von rechteckigem Querschnitt der Abstand der Luftöffnungen (18) 40 cm in Längsrichtung und 60 cm in Querrichtung beträgt.

22. Einrichtung nach einem der Ansprüche 17 bis 21, in der die Mittel (8) zur Luftzirkulation ein übliches Gebläse (19) mit einem Ansaugstutzen (21) une einem Druckstutzen (22) enthalten, wobei die Einrichtung gekennzeichnet ist durch Umschaltmittel, die aus einem Verbindungsstutzen (23) zwischen dem Druckstutzen (22) und dem Ansaugstutzen (21) bestehen, wobei der Verbindungsstutzen (23) mit einer beweglichen Klappe (25), die vollständig abschliessen kann, wie auch mit einem seitlichen Rohr (24) versehen ist, das durch den Druckstutzen (22) hindurchgestochen ist und ebenfalls eine bewegliche Klappe (26) trägt, wobei die beiden Klappen (25) und (26) gleichzeitig betätigt werden können, um in der einen Stellung das Einblasen und in der anderen Stellung das Ansaugen zu ermöglichen, wobei die einzige Leitung (27) zum Luftauslass in Verlängerung des Druckstutzens (22) vorgesehen ist.

23. Einrichtung nach einem der Ansprüche 17 bis 22, dadurch gekennzeichnet, dass sie eine Regelung zwischen den Vorgaben bezüglich der Temperatur in der Mitte der Masse im Verlauf der Fermentation und dem Antrieb der Luftzirkulation besitzt.

24. Einrichtung nach einem der Ansprüche 17 bis 23, dadurch gekennzeichnet, dass wenigstens eine Fermentierungszelle Doppelwände besitzt, um den Kreislauf einer wärmeabführenden Flüssigkeit zu gestatten und um wenigstens teilweise die durch die Fermentierung freigesetzte Wärme wiederzugewinnen.

25. Einrichtung nach einem der Ansprüche 17 bis 24, dadurch gekennzeichnet, dass sie Mittel zur Einleitung des gasförmigen Abstroms quer durch die Masse einer Zelle im Verlauf der Formentierung in eine Zelle, die bereits fermentierten Kompost enthält, besitzt.

## Claims

1. Improved process for obtaining a compost from organic waste products, in which the waste products are subjected to an aerobic fermentation after having, where appropriate, modified the composition by prior additions of carbon-containing, nitrogen-containing and/or phosphorus-containing materials, the said process being characterised in that it comprises the following steps;

a) Preparation of the waste products to be treated, involving:

(I) an adjustment of the C/N ratio to between 20 and 30,

(II) an adjustment of the pH to between 6.8 and 7.5, preferably between 7 and 7.5,

(III) a homogenisation of the mass of waste products resulting in a homogeneous mass which easily allows air to pass and

(IV) an adjustment of the moisture content to between 45 and 55% by weight, preferably between 50 and 55%,

b) fermentation of the said mass under static aerobic conditions, in a zone where the mass of waste products is at rest and where its moisture content is maintained at between 45 and 55% by weight, advantageously between 50 and 55% by weight, with alternate circulation of air forced upward through the mass and downward through it, so as to maintain, within the mass, conditions suitable for ensuring the mesophilic growth of the bacteria, implying fermentation temperatures of 50 to 60°C, preferably between 50 and 55°C,

c) supplementary fermentation, of shortened duration, while continuing the alternate circulation of air, but maintaining, within the mass, conditions suitable for ensuring the thermophilic growth of bacteria and the hygienisation of the waste products being treated, which implies temperatures above 70°C,

the duration of steps b) and c) above being such that virtually all the oxygen demands of the microorganisms present in the mass are satisfied, and

d) maturing of the mass of residues, the mass being left at rest under static conditions, without air circulation.

2. Process according to Claim 1, characterised in that settling sludges, crude refuse, liquid manure, drainage products and other organic waste products, individually or mixed with one another, for example a mixture of crude refuse and sludges in the respective proportions of 2/3 and 1/3 by weight, are treated.

3. Process according to one of Claims 1 or 2, characterised in that the C/N ratio is set at between 20 and 30, and preferably between 20 and 25, by additions of carbonaceous material, such as sawdust, ground bark or ground and screened crude refuse.

4. Process according to Claim 3, characterised in that the carbonaceous material is beforehand subjected to a treatment with saturated or non-saturated steam after which the carbonaceous material is allowed to cool before being mixed with the organic waste products.

5. Process according to one of Claims 3 or 4, characterised in that there are added to the carbonaceous material, preferably after steam treatment, enzymes capable of attacking the carbon bonds, such as enzymes from the group of the carbohydrases, especially cellulase and lignase.

6. Process according to any one of Claims 1 to 5, characterised in that, in step (a) of the preparation of the waste products, additives intended to improve the quality of the compost, such as clay earths, natural phosphates and other similar additives, are admixed.

7. Process according to any one of Claims 1 to 6, characterised in that a partial recycling of the compost is provided, the compost being recycled, after fermentation and before maturing to the preparation step, for mixing with the waste products to be treated.

8. Process according to any one of claims 1 to 7, characterised in that, during the fermentation steps (b) and (c), the alternate operations of air blowing-in and drawing-out are separated by periods during which the air does not circulate.

9. Process according to any one of claims 1 to 8, characterised in that the total duration of the fermentation is such that the oxygen demands of the microorganisms present in the mass of waste products to be treated are satisfied to the extent of at least 90%.

10. Process according to claim 9, characterised in that the duration of the fermentation step (b) is about 10 days at a temperature of 50 to 55°C, while the duration of fermentation step (c) is from 4 to 5 days at a temperature of 65—70°C.

11. Process according to any one of claims 1 to 10, characterised in that, during the fermentation,

the $CO_2$ content of the gases leaving the fermentation zone is from 4 to 6% by volume and the oxygen content is of the order of 10% by volume.

12. Process according to any one of claims 1 to 11, characterised in that, during step (d) of maturing the mass is left at rest in the fermentation zone without any air circulation or is removed from the said zone and spread over a maturing area, in regular heaps.

13. Process according to claim 12, characterised in that the duration of maturing is from 6 to 8 weeks.

14. Process according to any one of claims 1 to 13, characterised in that it is carried out in a battery of cells and that the effluent gases from a cell undergoing fermentation is used for drying the compost already fermented in another cell, the said effluent being drawn through the mass undergoing fermentation and being fed into the cell containing the already fermented compost.

15. Compost originating from organic waste products which compost can be obtained by the process according to any one of claims 1 to 14, and has the following properties:

(a) Physical properties
— dark brown to blackish colour
— structure and odour similar to those of forest undergrowth humus,
— particle size such that 95% of the product passes through an 8 mm mesh.

(d) Chemical properties
— free ammonia content: essentially none
— nitrogen-containing salts essentially present in the form of nitrates,
— sulphur-containing salts essentially in the form of sulphates,
— total nitrogen content (relative to the dry matter): greater than 0.6%,
— pH between 7 and 8
— C/N ratio between 20 and 30, preferably between 20 and 25.

16. Compost according to claim 15, characterised in that it is free from pathogenic germs and that the weed seeds which may be present no longer germinate.

17. Installation for carrying out the process according to any one of claims 1 to 13, the said installation essentially comprising a mixer (2) and at least one fermentation cell (7), the mixer (2) being equipped with known means for feeding it with the waste products to be treated (1) and for metering the additives (3, 4, 5) intended for the preparation of the mass of waste products, as well as means (6) for conveying the mass thus prepared to, and introducing the mass into, the cell (7), the said installation being characterised in that the prepared mass of waste products is introduced at the top of the cell (7), which is open, that the cell (7) possesses at least one removable panel for emptying out the mass after fermentation, that the bottom (12) of the cell has uniformly distributed orifices (18) to allow the passage of air and in that means (8) are provided for setting up a forced circulation of air through the bottom (12) in an alternating manner, by blowing-in, in which the air circulates upward, and by suction extraction, in which case the air circulates downward.

18. Installation according to claim 17, characterised in that the fermentation cell (7) has a square of rectangular cross-section, one of the side walls being movable.

19. Installation according to one of claims 17 or 18, characterised in that the cell (7) is of restricted height, for example of the order of 4 m, and has a capacity of about 120 m³.

20. Installation according to any one of claims 17 to 19, in which the bottom (12) of the fermentation cell (7) consists of a paving of which each individual paving slab (13) has an interior passageway (14) and a channel (15) connecting this passageway to the periphery (16) of the slab, the said installation being characterised in that it comprises a network of pipelines (17) crossing the paving by passing through the internal passageways (14), each pipeline being pierced with holes (18) for air circulation.

21. Installation according to claim 20, characterised in that, in the case of a cell (7) of rectangular cross-section, the spacing of the air orifices (18) is 40 cm in the longitudinal direction and 60 cm in the transverse direction.

22. Installation according to any one of claims 17 to 21, in which the means (8) for air circulation comprise a conventional blower (19) with an intake tube (21) and a delivery tube (22), the said installation being characterised by switching means which consist of a connecting tube (23) between the delivery tube (22) and the intake tube (21), the said connecting tube (23) being provided with a movable clack-valve or valve (25) with which the tube can be shut off completely, as well as of a side tube (24) set into the delivery tube (22) and also possessing a movable valve (26), the two valves (25) and (26) being capable of being actuated simultaneously in order to allow blowing-in, in one position, and suction-extraction, in the other position, the single air outlet pipe (27) being arranged as an extension of the delivery tube (22).

23. Installation according to one of claims 17 to 22, characterised in that it comprises a servo-control between the data relating to the temperature within the mass undergoing fermentation and the control of air circulation.

24. Installation according to any one of claims 17 to 23, characterised in that at least one fermentation cell has double walls to allow circulation of a heat-transfer fluid and to recuperate, at least partially, the heat evolved by the fermentation.

25. Installation according to any one of claims 17 to 24, characterised in that it possesses means for introducing the effluent gases, drawn through the mass in a cell undergoing fermentation, into a cell which contains already fermented compost.

FIG.1

Art antérieur

FIG.2

FIG.3

FIG.7

FIG.6

FIG.4

FIG.5

FIG.10

3

FIG.8

FIG.9